(19) Europäisches Patentamt / European Patent Office / Office européen des brevets

(11) **EP 3 564 870 A1**

(12) **EUROPEAN PATENT APPLICATION**

(43) Date of publication:
06.11.2019 Bulletin 2019/45

(51) Int Cl.:
*G06N 5/04* (2006.01)    *G06N 7/00* (2006.01)

(21) Application number: **19162984.9**

(22) Date of filing: **14.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2018 US 201815967508**

(71) Applicant: **FUJITSU LIMITED**
**Kanagawa 211-8588 (JP)**

(72) Inventors:
• **MALUR SRINIVASAN, Ramya**
  **Sunnyvale, CA 94085 (US)**
• **CHANDER, Ajay**
  **Sunnyvale, CA 94085 (US)**

(74) Representative: **Haseltine Lake Kempner LLP**
**Lincoln House, 5th Floor**
**300 High Holborn**
**London WC1V 7JH (GB)**

(54) **CAUSALITY FOR MACHINE LEARNING SYSTEMS**

(57)    A method may include obtaining one or more assumptions from a user, where the assumptions may be associated with a target result in a machine learning system. The method may also include identifying multiple variables, where the variables may represent causality candidates for the target result. The method may additionally include estimating a causal effect for each of the variables, and generating a causality explanation of the target result based on the causal effects for the variables. The method may also include providing the causality explanation to the user.

FIG. 1

**Description**

**FIELD**

Embodiments of the disclosure relate to causality for machine learning systems.

**BACKGROUND**

Machine learning systems may analyze data sets and identify correlations between various results and/or variables associated with those results. However, such correlations do not indicate the causality between variables of interest and the results. For example, even if a correlation is found between people carrying umbrellas and the rain, the machine learning system does not know that stopping people from carrying umbrellas will not stop the rain.

**SUMMARY**

The invention is defined by the independent claims, to which reference should now be made. Preferable features are set out in the dependent claims. One or more embodiments of the present disclosure may include a method that includes obtaining one or more assumptions from a user, where the assumptions may be associated with a target result in a machine learning system. The method may also include identifying multiple variables, where the variables may represent causality candidates for the target result. The method may additionally include estimating a causal effect for each of the variables, and generating a causality explanation of the target result based on the causal effects for the variables. The method may also include providing the causality explanation to the user.

It is to be understood that both the foregoing general description and the following detailed description are merely examples and explanatory and are not restrictive.

**BRIEF DESCRIPTION OF THE DRAWINGS**

Example embodiments will be described and explained with additional specificity and detail through the use of the accompanying drawings in which:

Figure 1 is a diagram illustrating an example system that may be used to determine causality for a machine learning system;
Figures 2A-2C are diagrams illustrating example directed acyclic graphs (DAGs) used in determining causality for a machine learning system;
Figures 3A and 3B illustrate a flow diagram of a method of determining causality for a machine learning system; and
Figure 4 illustrates an example computing system.

**DETAILED DESCRIPTION**

The present disclosure relates to the use of causality for machine learning systems. A directed acyclic graph (DAG) may be used to graphically represent a series of variables and at least one target result, where one or more of the variables and/or target results may be outputs of the machine learning system. A causal effect may be quantified for variables of interest by sufficiently isolating the variable of interest and estimating the causal effect for a given variable of interest. Using the quantified causal effects for the variables of interest, an explanation may be provided of which variable is causing the target result. Such an approach may facilitate the determination of and/or improvement of the accuracy of machine learning systems. Additionally, such an approach provides a more intuitive and easily accessible interface for analyzing causality and associated explanations.

One or more example embodiments are explained with reference to the accompanying drawings.

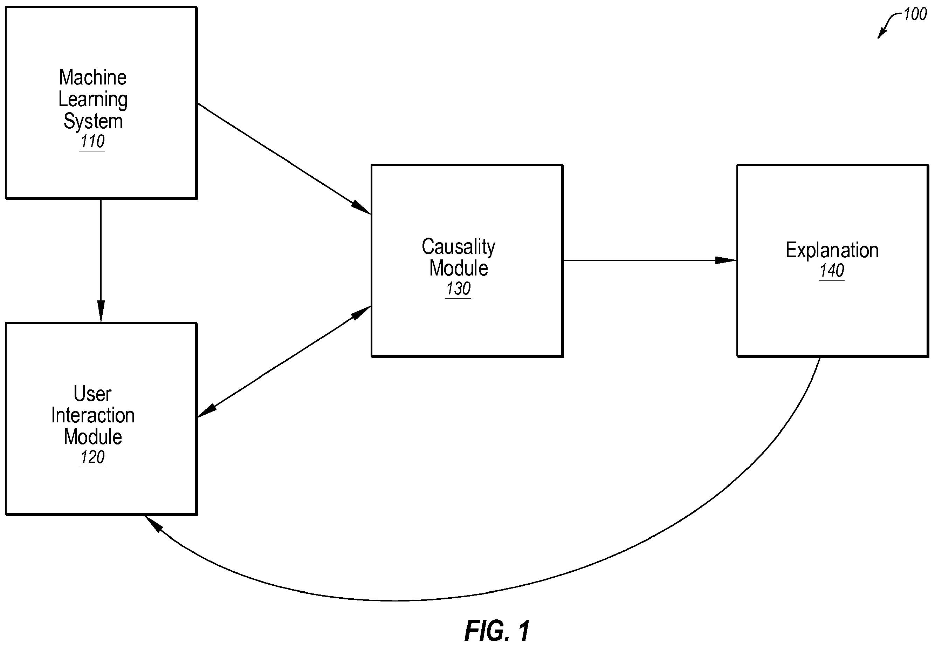

Figure 1 is a diagram illustrating an example system 100 that may be used to determine causality for a machine learning system, in accordance with one or more embodiments of the present disclosure. The system 100 may include a machine learning system 110 and a user interaction module 120 that may provide input to a causality module 130. The causality module 130 may facilitate determination of the explanation 140 associated with causality between variables and results. As used herein, a variable may include any activity, factor, attribute, etc. that may influence or otherwise potentially lead to a result. For example, if a result includes that a contract is won by a company, the variables may include the business unit associated with the new contract, the salesman who negotiated the contract, and the region of the world in which the contract was won. In some embodiments, such causality may lead to an explanation between the variables and the result, such as the contract was won because of the salesman who negotiated the contract. In these and other embodiments, if a user is dissatisfied with the provided explanation (e.g., the explanation is illogical, etc.), the user may interact with the system 100 (e.g., to adjust one or more assumptions) and the causality may be examined again.

The machine learning system 110 may include any machine learning system configured to identify relationships and/or correlations from a data set. For example, the machine learning system 110 may be configured to identify a set of most likely factors contributing to a result, whether directly or indirectly, by analyzing data sets. As an example, the machine learning system 110 may analyze all contracts won for a company, all pitches made without a contract won for a company, and may identify which factors correlate with the winning of a contract. As another example, the machine learning system 110 may be configured to analyze product purchases from a business, and may identify factors such as related products, demographics of purchasers, etc. to identify which factors correlate with the purchase of a product. As a further example, the machine learning system 110 may be configured to analyze patient health data and outcomes with certain diseases to identify which factors correlate with positive outcomes with the diseases. In these and other embodiments, the machine learning system 110 may provide the correlations and/or the factors contributing to a result to the user interaction module 120 and/or the causality module 130.

In some embodiments, the machine learning system 110 may operate using any machine learning technique or deep learning technique, such as decision tree learning, association rule learning, clustering, reinforcement learning, representation learning, genetic algorithms, etc. In some embodiments, the machine learning system 110 may be utilized to perform a task, such as providing a recommendation based on correlations in a data set.

The user interaction module 120 may include any device or system or components thereof configured to receive user input and/or provide information to the user. For example, the user interaction module 120 may present a set of variables of a result as determined by the machine learning system 110 to a user. In these and other embodiments, the user may utilize the user interaction module 120 to identify one or more variables of interest from the variables. For example, the user may designate a subset of the set of variables for a given result as those in which the user is interested. Additionally or alternatively, the user may indicate a particular result as the result in which the user is interested (e.g., a target result).

In some embodiments, the user may interact with the user interaction module 120 to designate one or more assumptions regarding assumed or believed causal relationships between one or more of the variables and/or results. For example, with reference to the contract example, the user may enter an assumed directional relationship between the salesman and the business unit (e.g., "Salesman X often performs well and has lots of sales when working with this particular business unit.").

The causality module 130 may include any device or system or components thereof configured to utilize the inputs from the machine learning system 110 (e.g., the variables and result) and from the user interaction module 120 (e.g., the assumptions and target result from the user) to generate the explanation 140.

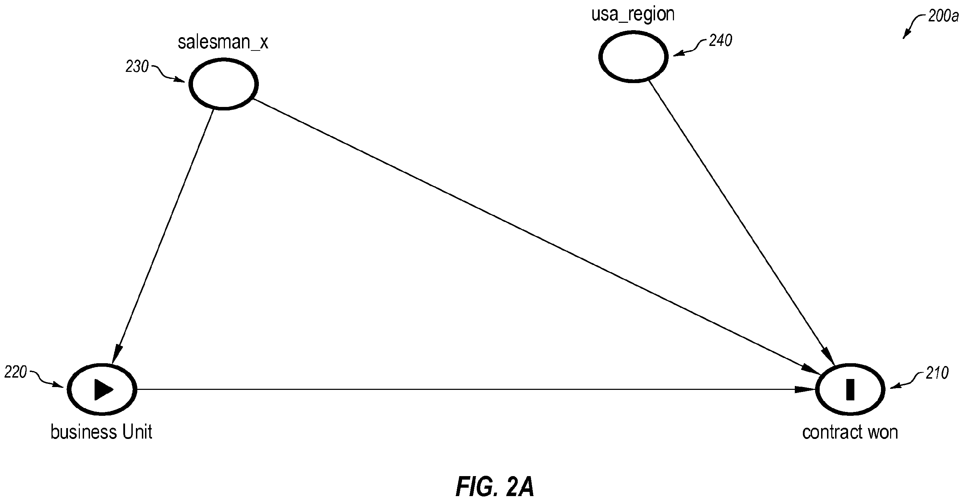

In some embodiments, the causality module 130 may construct a directed acyclic graph (DAG) representing the relationships and/or assumptions between the variables and the target result. Figures 2A-2C illustrate examples of such a DAG. In some embodiments, the DAG may begin with any known directional relationships with respect to the variables as related to other variables and/or the target result. The DAG may be supplemented by adding directional edges based on the assumptions as received from the user interaction module 120.

In some embodiments, the causality module 130 may construct the DAG without including the assumptions and may present the DAG visually to the user via the user interaction module 120. The user may utilize the visualization of the DAG to select the variables of interest and/or the target result. Additionally or alternatively, the user may utilize the visualization of the DAG to designate or create new relationships as the assumptions. In these and other embodiments, the visualization of the DAG may be accessed and interacted with via a graphical user interface (GUI) or any other interface of the user interaction module 120.

In some embodiments, the causality module 130 may utilize the DAG to analyze whether or not there is sufficient causal evidence to identify a causal relationship between the variables of interest and the target result. To perform such an analysis, the causality module 130 may determine whether or not the DAG includes any confounders. As used herein, a confounder may include any variable that affects one or more of the variables of interest as well as the target result. For example, if one of the variables includes a relationship with both a variable of interest and the target result, such a variable may be a confounder. In some embodiments, a confounder may be designated based on a single variable of interest. If the causality module 130 determines that there are no confounders in the DAG, the causality module 130 may determine a causal effect for each of the variables of interest to facilitate determination of the explanation 140.

Conversely, if the causality module 130 determines that there are confounders in the DAG, the causality module 130 may determine whether paths through the DAG to the target result that include the confounders (which may be referred to as back-door paths) are blockable. To determine whether the back-door paths can be blocked, the causality module 130 may consider which direction edges flow between the nodes in the back-door path, and whether or not the nodes are observed in the back-door path. One such blocking scenario may include where the back-door path includes a collider node (where two nodes converge on a single node, sometimes referred to as a head to head node), and the node and its descendants are not observed. Another blocking scenario may include a causal chain, where there may be a node in the path between the confounder and the target result with one edge coming in and one edge coming out (sometimes referred to as a casual chain) and that node is observed. Thus, to block a back-door path, the collider node may be unobserved and the other nodes in the back-door path may be observed. In these and other embodiments, if a given back-door path is unblockable, the causality module 130 may determine that there are confounders that may not be accounted for. In response, the causality module 130 may output a message indicating that there is insufficient causal evidence to determine the explanation 140. In some embodiments, the causality module 130 may provide an indication of what information may be used to provide the missing causal evidence. For example, the causality module 130 may indicate which paths are unblockable and what information or data may facilitate the blockability of such paths.

If the causality module 130 determines that all the back-door paths are blockable, the causality module 130 may block all such back-door paths. For example, the causality module 130 may control for the blocking variable in the determination of the explanation 140. After blocking all the back-door paths, the causality module 130 may determine the causal effects for each of the variables of interest.

To determine the causal effect for the various variables of interest, the causality module 130 may quantify the causal effect of each variable on the target result. In some embodiments, such quantification may be based on the variable including a binary value (e.g., is it salesman X that is involved in the negotiation of the contract?). In these and other embodiments, the causal effect may be quantified as a number between zero and one. The quantification of the causal effect of variable $X$ on target result $Y$ may be represented by Equation 1.

$$E(Y|do(X = 1)) - E(Y|do(X = 0)) = P(Y|X = 1) - P(Y|X = 0)$$

Equation 1

where E() represents the expectation function (e.g., $E(Y|do(X= 1))$ may represent the expected value of $Y$ given $do$ ($X= 1$)), the function $do$ ($X= 1$) represents intervening in the DAG and setting the value of the variable $X$ to its maximal value (e.g., 1), and the function $do$ ($X= 0$) represents intervening in the DAG and setting the value of the variable $X$ to its minimal value (e.g., 0), $P$() represents a probability function (e.g., $P(Y|X= 1)$ may represent the probability of the target result $Y$ occurring if the variable $X= 1$). Using Equation 1, a causal effect may be determined for a given variable of interest.

In some embodiments, various operations may be repeated for each variable of interest. For example, the causality module 130 may identify and handle any confounders and determine the causal effect for a given variable of interest, and those operations may be repeated for each of the variables of interest. Thus, the present disclosure may iteratively cycle through the variables of interest, determine if they can be isolated, and if they can be isolated, determine the causal effect of each of the variables of interest on the target result.

In these and other embodiments, the causality module 130 may compare the quantification of the causal effects for each of the variables of interest. To select the causal effect that results in the explanation 140, the causality module 130 may select the variable with the highest numerical value for the quantification of the causal effect. The causality module 130 may generate the explanation 140 based on the selected variable. For example, if the target result was winning a contract and the variable with the highest causal effect was whether or not the salesman X was involved, the explanation 140 may indicate that the contract was won because the salesman X was involved in negotiating the contract.

In some embodiments, after being presented with the explanation 140, the user may be dissatisfied with the explanation 140. In these and other embodiments, the user may modify or adjust one or more of the assumptions provided to the causality module 130 regarding the relationships and/or correlations between the variables. Additionally or alternatively, the user may set certain variables (e.g., setting the salesman X as always working on a given business unit to determine the causal effect if those variables are always set to their maximal value).

By iteratively repeating the process of adjusting the assumptions from the user, the causality module 130 may repeatedly generate different explanations 140 until the user is satisfied with the explanation 140. In some embodiments, the user may be dissatisfied with the explanation based on knowledge the user has about the relationships between variables in the DAG. For example, if a user is recommended a product as one they may be interested in, the causality module 130 may provide the explanation 140 as to why the user was recommended the product and the user may adjust the assumptions (e.g., based on the explanation "because you are interested in shoes, we recommended this brand of socks," the user may adjust the directional relationship between interest in shoes and socks). In some embodiments, the dissatisfaction of the user with the explanation 140 may be based on an illogical or faulty causal relationship, such as an explanation that people having umbrellas has caused it to rain. In some embodiments, the iterative processing may be used to analyze and/or determine counterfactual scenarios. For example, by changing assumptions the user may determine the potential causal effect if a certain variable had been different (e.g., if the salesman X had been operating in a different business unit, would we still have won the contract?).

In these and other embodiments, the present disclosure may improve the operation of machine learning systems by providing insight to users regarding the reasoning that forms the basis for the outputs of the machine learning systems.

For example, if the output is to provide a recommendation (e.g., a product recommendation, an advertisement recommendation, a treatment of a disease recommendation, etc.), the explanation 140 of the causality leading to the recommendation may be provided to the user and/or analyzed by the user. As another example, the effectiveness and/or accuracy of the machine learning system may be assessed. For example, using the explanation 140, the user may improve the accuracy of the machine learning system 110 by correcting faulty assumptions made by the machine learning system 110. For example, a recommendation may be made to a user purchasing a backpack to purchase a laptop based on a correlation in a data set between the purchase of laptops and backpacks. However, using embodiments of the present disclosure may identify the directionality and causality of the correlation such that a purchase of a laptop may result in a recommendation of a backpack but not vice versa.

One skilled in the art, after reviewing this disclosure, may recognize that modifications, additions, or omissions may be made to the system 100 without departing from the scope of the disclosure. For example, the designations of different elements in the manner described is meant to help explain concepts described herein and is not limiting. Further, the system 100 may include any number of other elements or may be implemented within other systems or contexts than those described.

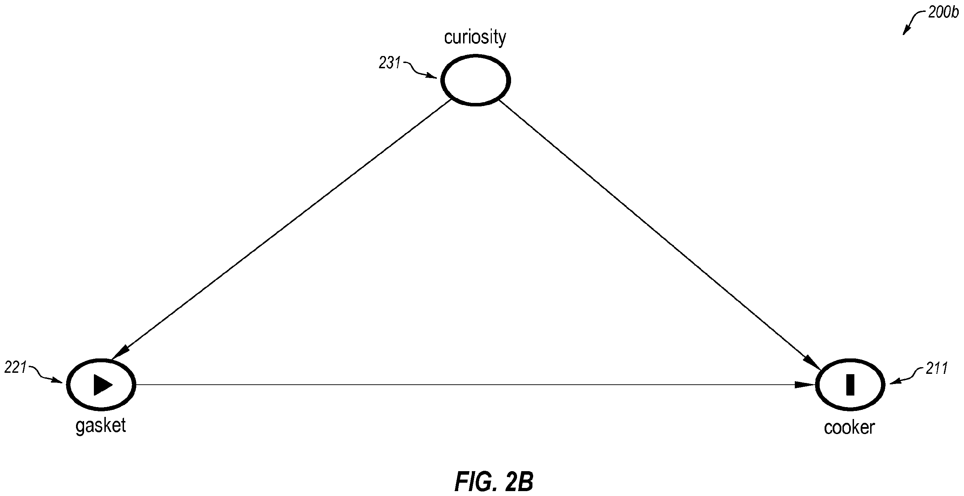

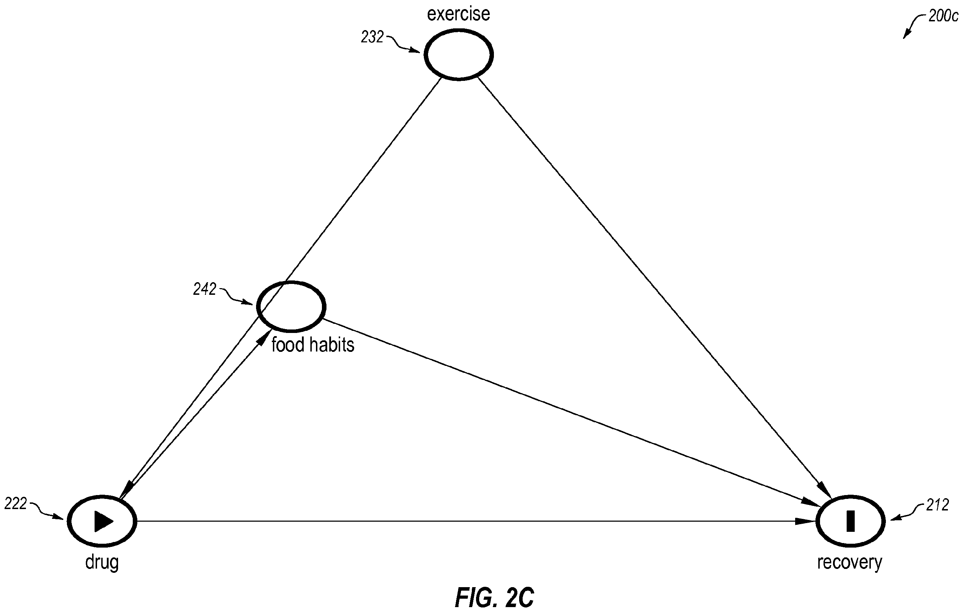

Figures 2A-2C are diagrams illustrating example directed acyclic graphs (DAGs) 200a-200c used in determining causality for machine learning systems, in accordance with one or more embodiments of the present disclosure. As illustrated in Figure 2A, the DAG 200a may be associated with an example of a target result (as designated by the vertical line) of a contract won 210, with variables of a business unit 220, a salesman_x 230, and a usa region 240. The variable of interest is the business unit 220 (as designated by the triangle). The DAG 200a may be based on an attempt to determine what caused a company to win a contract by their sales team (e.g., did we win the contract because of what business unit the contract was in). As illustrated in Figure 2B, the DAG 200b may be associated with an example of a target result (as designated by the vertical line) of a cooker 211 being purchased, with variables of a gasket 221 being purchased, and curiosity 231 of a purchaser. The variable of interest is the gasket 221 being purchased (as designated by the triangle). The DAG 200b may be based on an attempt to determine whether a recommendation to purchase a pressure cooker based on someone buying a gasket is a worthwhile recommendation (e.g., can purchasing a gasket cause someone to purchase a pressure cooker). As illustrated in Figure 2C, the DAG 200c may be associated with an example of a target result (as designated by the vertical line) of recovery 212 of a patient from an illness, with variables of a drug 222 being provided to the patient, exercise 232 of the patient, and food habits 242 of the patient. The variable of interest is the drug 222 being provided to the patient (as designated by the triangle). The DAG 200c may be based on an attempt to determine whether giving a patient a drug is what caused their recovery from the illness (e.g., did the drug cure the patient). In some embodiments, a user may identify the variables of interest and/or the target result.

In some embodiments, the variables used in the DAGs 200a-200c may be the top variables correlating with the target result as output from a machine learning system, such as the machine learning system 110 of Figure 1. Additionally or alternatively, the variables used in the DAGs 200a-200c may be the variables with a correlation score above a threshold for the machine learning system. In these and other embodiments, an initial DAG may include the directional edges from the variables to the target result. The initial DAG may be supplemented with assumptions from a user, such as the directional edge from the salesman_x 230 to the business unit 220 to yield the DAG 200a, or the directional edge from the drug 222 to the food habits 242 to yield the DAG 200c. In some embodiments, these assumptions may be implemented in an iterative manner, where the causality module 130 of Figure 1 may provide an explanation, the user may adjust assumptions based on the provided explanation and observe the revised explanation, and the process may be repeated until the set of assumptions and the explanation are to the satisfaction of the user. In some embodiments, one or more of the variables and/or assumption may be included in the DAG based on input from a user. For example, the user may identify one or more additional variables aside from those identified by a machine learning system to be included in the causal analysis.

With respect to the Figure 2A, when analyzing the business unit 220 as the variable of interest (e.g., the business unit 220 is the input and the contract won 210 is the output), a determination may be made whether or not any confounders are present in the DAG 200a. The salesman_x 230 may operate as a confounder, because the salesman_x 230 affects the variables of interest (the business unit 220) as well as the target result (the contract won 210). Based on the existence of the confounder, a determination may be made whether or not the paths to the contract won 210 from the confounder (the salesman x) are blockable. In the DAG 200a of Figure 2A, the path through the business unit 220 is blockable by observing the salesman x 230, and so that backdoor-path may be blocked. Additionally, the path between the salesman x 230 and the contract won 210 that is direct is blocked by observing the usa region 240. Therefore, the business unit 220 may be sufficiently isolated such that a determination of the causal effect between the business unit 220 and the contract won 210 may be determined. The causal effect may be quantified, for example, using Equation 1.

In some embodiments, the causal effect of the usa_region 240 and/or the salesman x 230 may also be determined, and an explanation may be generated based on the highest causal effect between the business unit 220, the salesman_x 230, and the usa region 240. In these and other embodiments, a user presented with the explanation may revise the assumptions and reapply the analysis to determine other explanations based on other assumptions and/or other variables added by the user. For example, the directional edge between the salesman_x 230 and the business unit 220 may be removed and a different directional edge may be introduced between the salesman_x 230 and the usa region 240. If the user is dissatisfied with the explanation, the user may continue to revise the assumptions until the user receives an explanation with which they are satisfied.

With reference to Figure 2B, when analyzing the gasket 221 purchase as the variable of interest and the cooker 211 purchase as the target result (e.g., the gasket 221 purchase is the input and the cooker 211 purchase is the output), a determination may be made whether or not any confounders are present in the DAG 200b. The curiosity 231 may operate as a confounder, because the curiosity 231 affects the variables of interest (the gasket 221) as well as the target result (the cooker 211). Based on the existence of the confounder, a determination may be made whether or not the paths to the cooker 211 from the confounder (the curiosity 231) are blockable. In the DAG 200b of Figure 2B, the path through the curiosity 231 is blockable by observing the curiosity 231, and so that backdoor-path may be blocked. For example, monitoring and/or analyzing what clicks a user performs when interacting with the gasket 221 and/or the cooker 211, as well as what sites or searches were the gateway to arriving at the site to purchase the cooker 211 may be used to control for the curiosity 231. Therefore, the gasket 221 may be sufficiently isolated such that a determination of the causal effect between gasket 221 and the cooker 211 may be determined. The causal effect may be quantified, for example, using Equation 1.

In some embodiments, the causal effect of the curiosity 231 may also be determined, and an explanation may be generated based on the highest causal effect between the gasket 221 and the curiosity 231. In these and other embodiments, a user presented with the explanation may revise the assumptions and reapply the analysis to determine other explanations based on other assumptions. If the user is dissatisfied with the explanation, the user may continue to revise the assumptions until the user receives an explanation with which they are satisfied.

With reference to Figure 2C, when analyzing the drug 222 as the variable of interest and the recovery 212 as the target result (e.g., the drug 222 is the input and the recovery 212 is the output), a determination may be made whether or not any confounders are present in the DAG 200c. The exercise 232 may operate as a confounder, because the exercise 232 affects the variable of interest (the drug 222) as well as the target result (the recovery 212). Based on the existence of the confounder, a determination may be made whether or not the paths to the recovery 212 from the confounder (the exercise 232) are blockable. In the DAG 200c of Figure 2C, the path through the exercise 232 is blockable by observing the exercise 232, and so that backdoor-path may be blocked. For example, monitoring and/or analyzing what exercise the patient performs using fitness tracking apps and/or devices, may be used to control for the exercise 232. Therefore, the drug 222 may be sufficiently isolated such that a determination of the causal effect between the drug 222 and the recovery 212 may be determined. The causal effect may be quantified, for example, using Equation 1.

In some embodiments, the causal effect of the exercise 232 and/or the food habits 242 may also be determined, and an explanation may be generated based on the highest causal effect between the drug 222, the exercise 232, and the food habits 242. In these and other embodiments, a user presented with the explanation may revise the assumptions and reapply the analysis to determine other explanations based on other assumptions. If the user is dissatisfied with the explanation, the user may continue to revise the assumptions until the user receives an explanation with which they are satisfied.

One skilled in the art, after reviewing this disclosure, may recognize that modifications, additions, or omissions may be made to Figures 2A-2C without departing from the scope of the disclosure. For example, the DAGs 200 may include any number of nodes and edges, and in application would likely have many more nodes and edges than illustrated in the simplified example of Figures 2A-2C. As another example, the DAGs 200a-c may be changed over time as a user provides different assumptions.

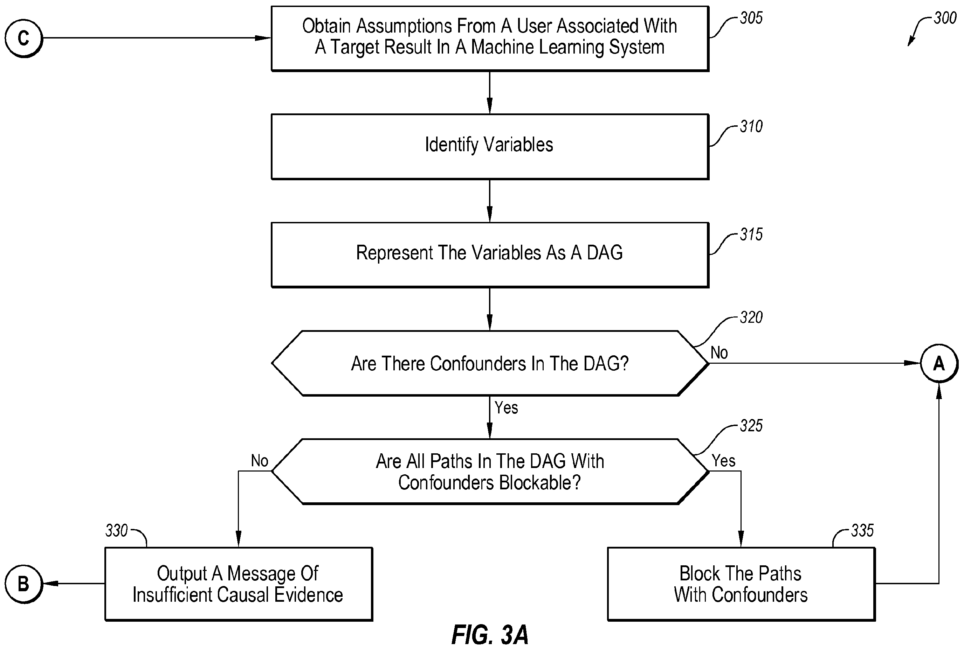

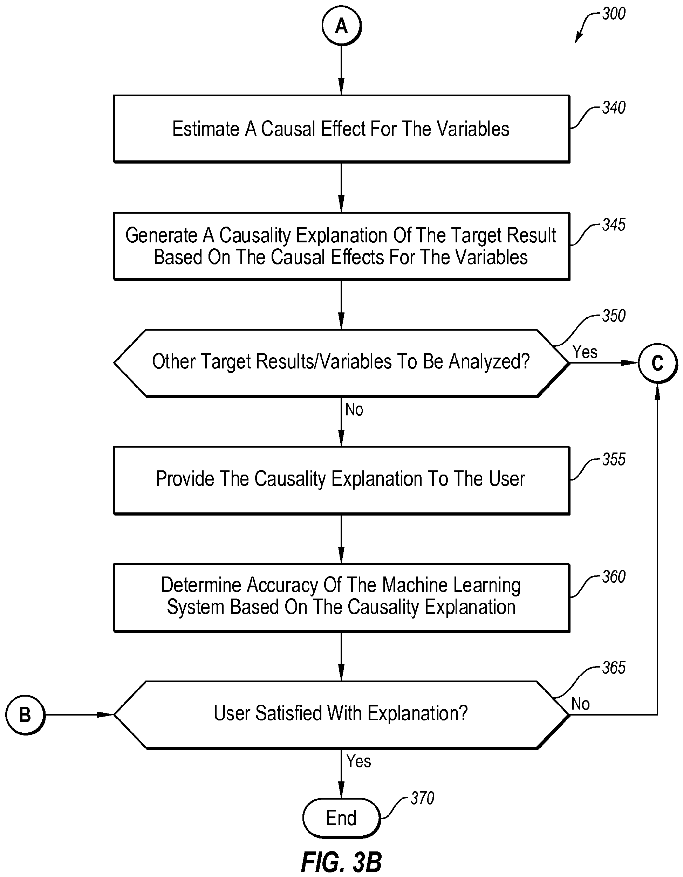

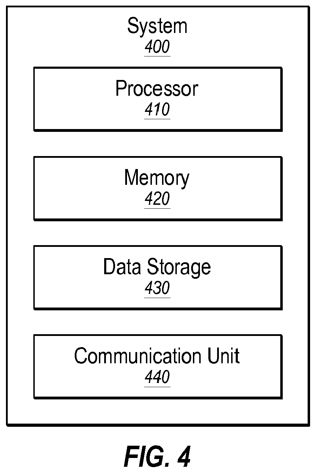

Figures 3A and 3B illustrate a flow diagram illustrating one embodiment of a process 300 of identifying a potential emulated mobile device. The process 300 may be arranged in accordance with at least one embodiment described herein. One or more operations of the process 300 may be performed by a system or device, or combinations thereof, such as the system 100, the machine learning system 110, the user interaction module 120, and/or the causality module 130 of Figure. 1, the computing system 400 of Figure. 4, etc. For illustrative purposes, various blocks below will be identified as potentially being performed by one of the machine learning system 110, the user interaction module 120, and/or the causality module 130 of Figure.1. In these and other embodiments, the process 300 may be performed based on the execution of instructions stored on one or more non-transitory computer-readable media. Although illustrated as discrete blocks, various blocks of the process 300 may be divided into additional blocks, combined into fewer blocks, or eliminated, depending on the desired implementation. For illustrative purposes, the blocks of the process 300 may be provided with reference to the DAG 200c of Figure 2C.

At block 305, one or more assumptions associated with a target result in a machine learning system may be obtained from a user. For example, a user interface module (such as the user interaction module 120 of Figure 1) may provide a user with outputs of a machine learning system (such as the machine learning system 110 of Figure 1) which may include variables of results. In some embodiments, the user may provide the assumptions by designating directional relationships between various variables and/or results.

With reference to the example of Figure 2C, a user may designate an assumption that there is an effect of exercise 232 on the drug 222.

At block 310, one or more variables may be identified. For example, the variables for a target result as designated by a user may be identified. In some embodiments, the identification of the variables may include analyzing or obtaining results of the machine learning system (e.g., what variables have a correlation or relationship above a threshold for the target result). In some embodiments, the block 310 may include identifying a target variable for which a causal effect may be determined.

With reference to the example of Figure 2C, a user may designate the drug 222 as the variable of interest and the recovery 212 as the target result.

At block 315, the variables may be represented as a DAG. For example, a DAG may be generated by a causality module (such as the causality module 130 of Figure 1) that graphically represents the relationships between the variables and the results. In these and other embodiments, the DAG may be generated in part based on the assumptions of the block 305. For example, the assumptions may introduce directional edges between one or more of the variables and/or results in the DAG.

With reference to the example of Figure 2C, the DAG 200c may be generated based on known correlations/causalities and/or the assumptions from the user (e.g., the connection between the exercise 232 and the drug 222).

At block 320, a determination may be made whether or not there are confounders in the DAG of the block 315. For example, for a given variable, a determination may be made by the causality module 130 whether or not there are other variables that affect the given variable and the target result. If there are confounders in the DAG, the process 300 may proceed to the block 325. If there are not confounders in the DAG, the process 300 may proceed to the block 340 via the node A leading to Figure 3B.

With reference to the example of Figure 2C, the exercise 232 may be identified as a confounder because it affects both the drug 222 and the recovery 212.

At block 325, a determination may be made whether or not all paths in the DAG with confounders (e.g., back-door paths) are blockable. For example, a determination may be made by the causality module 130 whether, for a given variable of interest and the target result, the paths between the variable of interest and the target result are affected by confounders. For example, a determination may be made whether the back-door paths between the given confounder and the target result includes a collider node and the collider node and its descendants are outside of the set of blocking variables (e.g., the collider node and its descendants may be unobserved to block such a back-door path). If all paths in the DAG with confounders (e.g., all back-door paths) are blockable, the process 300 may proceed to the block 335. If all paths in the DAG with confounders (e.g., all back-door paths) are not blockable, the process 300 may proceed to the block 330.

With reference to the example of Figure 2C, a determination may be made whether the exercise 232 may be controlled for.

At the block 330, a message may be output of insufficient causal evidence. For example, the causality module 130 may output such a message indicating that the variables of interest may not be sufficiently isolated. In some embodiments, such a message may include indications of what additional information or assumptions may provide sufficient information to provide an explanation of the causality of the target result. The output of such a message may be considered an explanation of the causality (such as the explanation 140 of Figure 1), and the process may proceed to the block 365 via the node B leading to Figure 3B.

With reference to the example of Figure 2C, if it is assumed that the exercise 232 cannot be controlled for, the output message may indicate that there is insufficient causal evidence because the exercise 232 may affect the recovery 212 and cannot be controlled for.

At block 335, the paths with confounders may be blocked. For example, the causality module 130 may maintain any collider nodes and their descendants as unobserved and may observe other nodes in the back-door paths between the variable of interest and the target result. After the block 335, the process 300 may proceed to the block 340 via the node A leading to Figure 3B.

With reference to the example of Figure 2C, the path from the exercise 232 to the recovery 212 may be blocked, for example, by controlling for and observing the exercise 232. As described above, controlling and/or observing the exercise 232 may be accomplished by using fitness tracker applications or devices to monitor the exercise habits of the patient.

At block 340, a causal effect for the variables may be estimated. For example, the causality module 130 may estimate the causal effect for the variables. In some embodiments, such an estimation may include a quantification based on Equation 1. In these and other embodiments, the estimation of the block 340 may be based on a single variable of interest and one or more of the blocks 320-340 may be iteratively repeated for each of the variables under consideration until each of the variables under consideration has an associated causal effect.

With reference to the example of Figure 2C, causal effect of the drug 222 may be estimated, after controlling for the exercise 232. The blocks 320-340 may be iteratively repeated to determine a causal effect estimate for the food habits 242 and for the exercise 232.

At block 345, a causality explanation of the target result may be generated based on the causal effects for the variables. For example, the causality module 130 may select the variable with the highest causal effect as the reason for the target result and may generate the causality explanation (such as the explanation 140 of Figure 1) as the highest causal effect variable causing the target result.

With reference to the example of Figure 2C, whichever of the causal effects of the drug 222, exercise 232, and the food habits 242 has the highest causal effect may be identified in the causal explanation as causing the target result. For example, if the drug 222 has the highest causal effect, the drug 222 may be identified as explaining the cause of the recovery 212.

At block 350, a determination may be made whether or not there are other target results and/or variables to be analyzed. For example, the causality module 130 may be configured to analyze multiple target results and provide an explanation that addresses each of the target results. As another example, the causality module may analyze multiple variables. If a determination is made that there are other target results and/or variables to be analyzed, the process 300 may return to the block 305 via the node C returning to Figure 3A. If a determination is made that there are not other target results and/or variables to be analyzed, the process 300 may proceed to the block 355.

With reference to the example of Figure 2C, the recovery 212 is the only target result being analyzed so the process 300 may proceed to the block 355.

At block 355, the causality explanation may be provided to the user.

With reference to the example of Figure 2C, following the assumption that the drug 222 has the highest causality effect, the causality explanation of the block 345 may be provided that the drug 222 causes the recovery 212.

At block 360, an accuracy of the machine learning system maybe determined based on the causality explanation and/or user feedback or revisions to the DAG based on the explanation provided at 350. For example, the causality module and/or the machine learning system may monitor the iterative responses of the user to adjust assumptions or modifications made by the user to the DAG. By analyzing the modifications and changes made by the user, the causality module may determine the accuracy of the machine learning system. Additionally or alternatively, the directionality of the causality may provide greater accuracy to the machine learning system. For example, the causality module may provide the machine learning system identification of faulty assumptions or incorrect correlations or directional connections in the DAG as determined by the changes made by the user in the iterative feedback provided by the user (e.g., as illustrated in block 365, returning back to block 305). The machine learning system may utilize that information to provide more accurate analyses in the future. For example, following the example of the DAG 200b illustrated in Figure 2B, if the feedback from the user modified assumptions to show that there is no directional connection between purchasing a gasket and purchasing a pressure cooker, in the future, the machine learning system may provide a recommendation of gaskets when a user purchases a pressure cooker but will not provide recommendations of pressure cookers when a user purchases a gasket.

With reference to the example of Figure 2C, based on the causality explanation and based on changes to assumptions made by the user, the initial accuracy of the machine learning system used to generate the initial DAG 200c may be determined. Additionally or alternatively, the machine learning system may use the information of the changes to assumptions made by the user to provide a more accurate machine learning analysis in the future.

At block 365, a determination may be made whether or not the user is satisfied with the explanation. For example, the causality module may provide the user with a binary query via the user interaction module whether or not the user is satisfied with the explanation. As another example, the user may be invited to adjust one or more assumptions and to observe the changes on the explanation based on the adjusted assumptions. As an additional example, the user may be provided an opportunity to provide the additional information or assumptions identified at the block 330 when outputting the message of insufficient causal evidence. Based on the user response, the causality module may determine whether or not the user is satisfied with the explanation. If it is determined that the user is satisfied with the explanation (for example, because the user has selected an affirmative response to the binary query), the process 300 may proceed to the block 370 to end the process. If it is determined that the user is not satisfied with the explanation, the process 300 may return to the block 305 via the node C returning to the Figure 3A.

With reference to the example of Figure 2C, a user may be queried whether or not they are satisfied with the explanation (e.g., that the drug 222 causes the recovery 212). If the user wants to then analyze whether an assumed causal relationship between exercise and food habits also affects the causal analysis, the DAG 200c may be updated with a directional edge from the exercise 232 to the food habits 242, and the process 300 may be repeated. As another example, if the user wants to then include other variables such as the age of the patient, the smoking history of the patient, etc., the user may add additional variables with associated assumptions to add more detail and/or more complexity to the causal analysis.

At block 370, the process 300 may end.

One skilled in the art, after reviewing this disclosure, may recognize that modifications, additions, or omissions may be made to the process 300 without departing from the scope of the disclosure. For example, the operations of the process 300 may be implemented in differing order. Additionally or alternatively, two or more operations may be performed at the same time. Furthermore, the outlined operations and actions are provided as examples, and some of the operations and actions may be optional, combined into fewer operations and actions, or expanded into additional operations and actions without detracting from the essence of the disclosed embodiments.

Figure 4 illustrates an example computing system 400 for determining causality in machine learning systems, according to at least one embodiment described in the present disclosure. The computing system 400 may include a processor 410, a memory 420, a data storage 430, and/or a communication unit 440, which all may be communicatively coupled. Any or all of the system 100 of Figure 1 may be implemented as a computing system consistent with the computing system 400. For example, the machine learning system 110, the user interaction module 120, and the causality module 130 may be implemented together as a single computing system. As another example, the machine learning system 110 may be implemented as one computing system while the causality module and the user interaction module may be implemented as a separate computing system. As an additional example, the machine learning system 110 may be implemented as one computing system, the causality module 130 may be implemented as another computing system, and the user interaction module 120 may be implemented as an additional computing system. In these and other embodiments, the computing system 400 may be a specialized computing system configured to perform specific and non-conventional operations, such as those identified in Figures 3A-3B.

Generally, the processor 410 may include any suitable special-purpose or general-purpose computer, computing entity, or processing device including various computer hardware or software modules and may be configured to execute instructions stored on any applicable computer-readable storage media. For example, the processor 410 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in Figure 4, it is understood that the processor 410 may include any number of processors distributed across any number of network or physical locations that are configured to perform individually or collectively any number of operations described in the present disclosure. In some embodiments, the processor 410 may interpret and/or execute program instructions and/or process data stored in the memory 420, the data storage 430, or the memory 420 and the data storage 430. In some embodiments, the processor 410 may fetch program instructions from the data storage 430 and load the program instructions into the memory 420.

After the program instructions are loaded into the memory 420, the processor 410 may execute the program instructions, such as instructions to perform the process 300 of Figures 3A and 3B. For example, the processor 410 may obtain instructions regarding determining causality in results of a machine learning system, and generating an explanation regarding the causality. As another example, the processor 410 may analyze user changes to assumptions leading to the explanation, and determine accuracy of a machine learning system based on those changes to assumptions.

The memory 420 and the data storage 430 may include computer-readable storage media or one or more computer-readable storage mediums for carrying or having computer-executable instructions or data structures stored thereon. Such computer-readable storage media may be any available media that may be accessed by a general-purpose or special-purpose computer, such as the processor 410. In some embodiments, the computing system 400 may or may not include either of the memory 420 and the data storage 430.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 410 to perform a certain operation or group of operations.

The communication unit 440 may include any component, device, system, or combination thereof that is configured to transmit or receive information over a network. In some embodiments, the communication unit 440 may communicate with other devices at other locations, the same location, or even other components within the same system. For example, the communication unit 540 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 440 may permit data to be exchanged with a network and/or any other devices or systems described in the present disclosure. For example, the communication unit 440 may allow the system 400 to communicate with other systems, such as computing devices and/or other networks.

One skill in the art, after reviewing this disclosure, may recognize that modifications, additions, or omissions may be made to the system 400 without departing from the scope of the present disclosure. For example, the system 400 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and processes described herein are generally described as being implemented in software (stored on and/or executed by general purpose hardware), specific hardware implementations or a combination of software and specific hardware implementations are also possible and contemplated.

The invention provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

In any of the above aspects, the various features may be implemented in hardware, or as software modules running on one or more processors. Features of one aspect may be applied to any of the other aspects.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

Additionally, the use of the terms "first," "second," "third," etc. are not necessarily used herein to connote a specific order. Generally, the terms "first," "second," "third," etc., are used to distinguish between different elements. Absence a showing of a specific that the terms "first," "second," "third," etc. connote a specific order, these terms should not be understood to connote a specific order.

All examples and conditional language recited herein are intended for pedagogical objects to aid the reader in understanding the invention and the concepts contributed by the inventor to furthering the art, and are to be construed as being without limitation to such specifically recited examples and conditions. Although embodiments of the present disclosure have been described in detail, it should be understood that various changes, substitutions, and alterations could be made hereto without departing from the spirit and scope of the present disclosure.

The previous description of the disclosed embodiments is provided to enable any person skilled in the art to make or use the present disclosure. Various modifications to these embodiments will be readily apparent to those skilled in the art, and the generic principles defined herein may be applied to other embodiments without departing from the spirit or scope of the disclosure. Thus, the present disclosure is not intended to be limited to the embodiments shown herein but is to be accorded the widest scope consistent with the principles and novel features disclosed herein.

**Claims**

1. A method comprising:

   obtaining one or more assumptions from a user, the assumptions associated with a target result in a machine learning system;
   identifying a plurality of variables, the variables representing causality candidates for the target result;
   estimating a causal effect for each of the variables;
   generating a causality explanation of the target result based on the causal effects for the variables; and
   providing the causality explanation to the user.

2. The method of claim 1, wherein obtaining one or more assumptions includes:

   receiving an assumed causal relationship between at least one variable and the target result; and
   representing the plurality of variables as a directed acyclic graph, DAG, the DAG including at least an edge flowing from the at least one variable and the target result.

3. The method of claim 2, wherein estimating the causal effect includes:

   identifying whether or not there are confounders in the DAG, the confounders including one or more variables related to the at least one variable and impacting the target result; and
   determining if all paths in the DAG to the target result that include confounders are blockable.

4. The method of claim 3, wherein estimating the causal effect includes, based on a determination that all the paths in the DAG to the target result that include confounders are blockable, blocking all the paths in the DAG to the target result that include confounders.

5. The method of claim 3 or 4, wherein estimating the causal effect includes, based on a determination that not all the paths in the DAG to the target result that include confounders are blockable, outputting a message indicating that insufficient causal evidence.

6. The method of any preceding claim, further comprising iteratively repeating the method based on modified assumptions from the user.

7. The method of any preceding claim, wherein the variables are an output of the machine learning system.

8. The method of any preceding claim, wherein the causality explanation is based on a highest causal effect of the causal effects of the variables such that a given variable receiving the highest causal effect is identified as causing the target result.

9. The method of any preceding claim, further comprising determining an accuracy of the machine learning system based on the causality explanation.

10. A computer program comprising instructions which, when the program is executed by a computer, causes the computer to carry out the method of any of claims 1 to 9.

11. A non-transitory computer-readable medium having stored thereon the computer program of claim 10.

12. A system comprising:

   one or more processors; and
   one or more of the non-transitory computer-readable media as claimed in claim 11.

**FIG. 1**

EP 3 564 870 A1

*FIG. 2A*

EP 3 564 870 A1

**FIG. 2B**

EP 3 564 870 A1

**FIG. 2C**

EP 3 564 870 A1

EP 3 564 870 A1

C ⟶ Obtain Assumptions From A User Associated With A Target Result In A Machine Learning System ⟨ 305

300

Identify Variables ⟨ 310

Represent The Variables As A DAG ⟨ 315

Are There Confounders In The DAG? ⟨ 320 — No ⟶ A

Yes

Are All Paths In The DAG With Confounders Blockable? ⟨ 325
No ⟵ | Yes ⟶

330 ⟨ Output A Message Of Insufficient Causal Evidence ⟶ B

335 ⟨ Block The Paths With Confounders ⟶ A

**FIG. 3A**

Ⓐ

300

Estimate A Causal Effect For The Variables — 340

Generate A Causality Explanation Of The Target Result Based On The Causal Effects For The Variables — 345

Other Target Results/Variables To Be Analyzed? — 350

Yes → Ⓒ

No

Provide The Causality Explanation To The User — 355

Determine Accuracy Of The Machine Learning System Based On The Causality Explanation — 360

Ⓑ → User Satisfied With Explanation? — 365

No

Yes

End — 370

**FIG. 3B**

System
400

Processor
410

Memory
420

Data Storage
430

Communication Unit
440

*FIG. 4*

Europäisches
Patentamt

European
Patent Office

Office européen
des brevets

# EUROPEAN SEARCH REPORT

Application Number

EP 19 16 2984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/292248 A1 (GARCIA FERNANDO MARTEL [US]) 6 October 2016 (2016-10-06)<br>* paragraph [0002] - paragraph [0041] *<br>* paragraph [0079] - paragraph [0129] *<br>* paragraph [0133] - paragraph [0145] *<br>* paragraph [0158] *<br>* paragraph [0164] - paragraph [0165] *<br>* paragraph [0174] - paragraph [0186] *<br>* paragraph [0201] *<br>* paragraph [0206] *<br>* paragraph [0210] *<br>* paragraph [0218] - paragraph [0221] *<br>* paragraph [0226] - paragraph [0233] *<br>* figures 1-34 * | 1-12 | INV.<br>G06N5/04<br>G06N7/00 |
| A | JUDEA PEARL: "An Introduction to Causal Inference",<br>THE INTERNATIONAL JOURNAL OF BIOSTATISTICS,<br>vol. 6, no. 2,<br>26 January 2010 (2010-01-26), XP055622048,<br>DOI: 10.2202/1557-4679.1203<br>* abstract; figures 1-6 *<br>* paragraph [0001] - paragraph [3.3.4] *<br>* page 26 - page 44 *<br>* page 50 - page 51 * | 1-12 | |
| A | Ricardo Silva: "Causality",<br>,<br>27 October 2014 (2014-10-27), XP055622059,<br>Retrieved from the Internet:<br>URL:http://www.homepages.ucl.ac.uk/~ucgtrbd/papers/causality.pdf<br>[retrieved on 2019-09-13]<br>* the whole document * | 1-12 | |

TECHNICAL FIELDS SEARCHED (IPC)

G06N

-/--

The present search report has been drawn up for all claims

| Place of search | Date of completion of the search | Examiner |
|---|---|---|
| The Hague | 17 September 2019 | Cilia, Elisa |

EPO FORM 1503 03.82 (P04C01)

page 1 of 2

Europäisches
Patentamt

European
Patent Office

Office européen
des brevets

## EUROPEAN SEARCH REPORT

Application Number

EP 19 16 2984

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Ricardo Silva: "Causal Inference in Machine Learning", Machine Learning Tutorial Series at Imperial College, 26 November 2014 (2014-11-26), pages 1-124, XP055622072, Retrieved from the Internet: URL:http://www.homepages.ucl.ac.uk/~ucgtrbd/talks/imperial_causality.pdf [retrieved on 2019-09-13] * the whole document * ----- | 1-12 | |
| | | | TECHNICAL FIELDS SEARCHED (IPC) |

The present search report has been drawn up for all claims

| Place of search | Date of completion of the search | Examiner |
|---|---|---|
| The Hague | 17 September 2019 | Cilia, Elisa |

EPO FORM 1503 03.82 (P04C01)

page 2 of 2

## ANNEX TO THE EUROPEAN SEARCH REPORT
## ON EUROPEAN PATENT APPLICATION NO.

EP 19 16 2984

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2019

| Patent document cited in search report | Publication date | Patent family member(s) | Publication date |
|---|---|---|---|
| US 2016292248 A1 | 06-10-2016 | EP 3072089 A1<br>US 2016292248 A1<br>WO 2015077708 A1 | 28-09-2016<br>06-10-2016<br>28-05-2015 |

EPO FORM P0459

For more details about this annex : see Official Journal of the European Patent Office, No. 12/82